# EUROPÄISCHE PATENTSCHRIFT

(11) **EP 2 657 425 B1**
(45) Veröffentlichungstag und Bekanntmachung des Hinweises auf die Patenterteilung: **02.08.2017**
(21) Anmeldenummer: 12165106.1
(22) Anmeldetag: 23.04.2012
(51) Int. Cl.: E04F 13/08, E04B 1/76

(54) **Wärmedämmverbundplatte und Verfahren zur Wärmedämmung einer Fenster- oder Türlaibung in einer Gebäudeaußenwand**
Heat insulation compound panel and heat insulation method for a window or door embrasure in the outer wall of a building
Plaque composite d'isolation thermique et procédé d'isolation thermique d'un intrados de fenêtre ou de porte dans la paroi extérieure d'un bâtiment

(43) Veröffentlichungstag der Anmeldung: 30.10.2013
(73) Patentinhaber: STO SE & Co. KGaA, 79780 Stühlingen (DE)
(72) Erfinder: Duttlinger, Werner, 79848 Bonndorf (DE); Hitzler, Martin, 78244 Gottmadingen (DE); Maier, Bernhard, 79777 Ühlingen-Birkendorf/Berau (DE); Zwerger, Markus, 79848 Bonndorf (DE); Weier, Andreas, 78647 Trossingen (DE)
(74) Vertreter: Gottschalk, Matthias

(56) Entgegenhaltungen:
- EP-A1- 0 550 873
- EP-A2- 1 544 367
- WO-A2-2010/112188
- DE-U1-202007 008 570
- DE-U1-202008 002 491
- US-A1- 2010 242 398

## Beschreibung

Die Erfindung betrifft eine Wärmedämmverbundplatte und ein Verfahren zur Wärmedämmung einer Fenster- oder Türlaibung in einer Gebäudeaußenwand. Im Bereich von Fenster- oder Türlaibungen kann die Wärmedämmung oftmals nicht in der gleichen Stärke wie in der Fläche ausgeführt werden, da es das Öffnungsmaß des Fensters bzw. der Tür zu berücksichtigen gilt. Daher gelangen hier sehr effektive Wärmedämmmaterialien zum Einsatz, die in der Regel jedoch sehr teuer sind. Darüber hinaus weisen derartige Wärmedämmmaterialien häufig eine geringe Eigenstabilität auf, so dass sie auf der Baustelle schwer zu handhaben sind.

### Stand der Technik

Aus der DE 10 2008 056 594 A1 geht ein Wandverkleidungselement zum Abdecken oder Einfassen einer Laibung oder Laibungskante hervor, das eine Trägerplatte mit einer hierauf befestigte Wärmedämmplatte umfasst. Die Wärmedämmplatte ist aus einem Wärmedämmmaterial, dessen Wärmeleitkoeffizienten λ ≤ 0,028 W/K*m beträgt. Die Wärmedämmplatte besitzt somit sehr gute Wärmedämmeigenschaften, jedoch keine hinreichende Eigenstabilität. Dies wird durch den Verbund der Wärmedämmplatte mit der Trägerplatte kompensiert. Die Trägerplatte dient ferner als Putzträgerplatte und ist auf der der Wärmedämmplatte abgewandten Seite mit einer Putzschicht versehen. Ferner wird vorgeschlagen, dass die Trägerplatte selbst aus einem Wärmedämmmaterial, beispielsweise aus geschäumtem Polystyrol, besteht. Das Wärmedämmmaterial der Trägerplatte muss jedoch eine höhere Steifigkeit als das Wärmedämmmaterial der hieran befestigten Wärmedämmplatte besitzen, um die gewünschte Stabilität des Verbundes zu erzielen.

Da nicht alle Laibungen die gleiche Tiefe besitzen, muss das entsprechende Wandverkleidungselement vorzugsweise vor dem Anbringen an der Laibungsfläche zugeschnitten werden. Ein sandwichartiger Aufbau, wie ihn das in der vorstehend genannten Druckschrift beschriebene Wandverkleidungselement aufweist, erschwert das Zuschneiden. Dies gilt insbesondere, wenn das Wandverkleidungselement bereits die fertige Endbeschichtung aufweist. Zudem gehen über den Verschnitt teure Wärmedämmmaterialien verloren.

Aus der WO 2010/112188 ist ferner eine Verbundwärmedämmplatte bekannt, die wenigstens eine Vakuumisolationsplatte umfasst, die von zwei Dämmschichten und einem Dämmrand umgeben ist. Diese Dämmschichten und der Dämmrand können aus demselben Dämmstoff bestehen, wie zum Beispiel Mineralwolle oder Glaswolle. Ausgehend von dem vorstehend genannten Stand der Technik liegt der vorliegenden Erfindung die Aufgabe zugrunde, eine Wärmedämmverbundplatte sowie ein Verfahren zur Wärmedämmung einer Fenster- oder Türlaibung in einer Gebäudeaußenwand bereitzustellen, welche das Dämmen von Laibungen vereinfacht und zudem kostengünstiger gestaltet.
Die Aufgabe wird gelöst durch eine Wärmedämmverbundplatte mit den Merkmalen des Anspruchs 1 sowie ein Verfahren mit den Merkmalen des Anspruchs 7. Vorteilhafte Weiterbildungen der Erfindung sind in den Unteransprüchen angegeben.

### Offenbarung der Erfindung

Die zur Wärmedämmung einer Fenster- oder Türlaibung in einer Gebäudeaußenwand vorgeschlagene Wärmedämmverbundplatte umfasst eine erste Wärmedämmplatte aus einem ersten Wärmedämmmaterial und eine zweite Wärmedämmplatte aus einem zweiten Wärmedämmmaterial, wobei jede Wärmedämmplatte zwei über Seitenflächen verbundene, parallele Oberflächen besitzt. Die beiden Wärmedämmplatten sind dabei nebeneinander liegend angeordnet und miteinander verbunden, so dass die Wärmedämmplatten aneinander liegende Seitenflächen aufweisen. Dadurch, dass die Wärmedämmplatten nicht aufeinander liegend angeordnet, sondern im Bereich ihrer Seitenflächen gestoßen sind, kann zur Anpassung der Wärmedämmverbundplatte an eine vorhandene Laibungstiefe der Zuschnitt im Bereich einer Wärmedämmplatte erfolgen. Der Zuschnitt wird dadurch vereinfacht. Vorzugsweise erfolgt der Zuschnitt im Bereich der Wärmedämmplatte, welche gegenüber der weiteren Wärmedämmplatte eine höhere Wärmeleitfähigkeit, d.h. schlechtere Wärmedämmeigenschaften, besitzt und/oder preiswerter herstellbar ist. Dadurch können Materialkosten eingespart werden.

Erfindungsgemäß sind die beiden Wärmdämmplatten über ein mechanisches Verbindungsmittel beispielsweise in Form eines Stifts, eines Blechs und/oder einer Klammer, miteinander verbunden. Das Verbindungsmittel ist vorzugsweise derart in die beiden aneinander liegenden Seitenflächen der Wärmedämmplatten eingelassen, dass ein in einer Richtung senkrecht zur Plattenebene der Wärmedämmverbundplatte wirksamer Formschluss bewirkt wird. Alternativ oder ergänzend kann ein mechanisches Verbindungsmittel außen an den Oberflächen der Wärmedämmplatten anliegen und hieran befestigt sein, so dass die Wärmedämmplatten über das Verbindungmittel miteinander verspannt werden. Um ein Verspannen der Wärmedämmplatten zu bewirken, ist das Verbindungsmittel vorzugsweise als Klammer oder als Blech mit senkrecht hierzu stehenden Dornen ausgebildet. Auf diese Weise wird ein in der Plattenebene wirksamer Formschluss bewirkt.

Alternativ oder ergänzend wird vorgeschlagen, dass die aneinander liegenden Seitenflächen der beiden Wärmdämmplatten ein ineinander greifendes Profil aufweisen und auf diese Weise einen in einer Richtung senkrecht zur Plattenebene der Wärmedämmverbundplatte wirksamen Formschluss bewirken. Beispielsweise können die aneinander liegenden Seitenflächen der Wärmedämmplatten mit einem Stufenfalz oder einer Nut bzw. einer Feder ausgestattet sein, wobei das Profil jeweils gegengleich ausgebildet ist, so dass die Stufenfalze bzw. die Nut und die Feder ineinander greifen.

Bevorzugt sind die beiden nebeneinander liegenden, das heißt im Bereich ihrer Seitenflächen gestoßenen Wärmedämmplatten über wenigstens eine gemeinsame Armierungsschicht, umfassend ein Papier, ein Vlies, ein Gewebe und/oder eine Armierungsmasse, miteinander verbunden. Die Armierungsschicht ist demnach auf wenigstens zwei nebeneinander liegenden Oberflächen der Wärmedämmplatten aufgebracht und erstreckt sich über die Stoßfuge zwischen den beiden Wärmedämmplatten hinweg. Weiterhin bevorzugt wird vorgeschlagen, dass sich die gemeinsame Armierungsschicht vollflächig über zwei nebeneinander liegende Oberflächen der Wärmedämmplatten der Wärmedämmverbundplatte erstreckt, so dass die aus den beiden Wärmedämmplatten zusammengesetzte Wärmedämmverbundplatte eine ebene Oberfläche besitzt. Das heißt, dass wenigstens eine Oberfläche der aus den beiden Wärmedämmplatten zusammengesetzten Wärmedämmverbundplatte mit einer solchen Armierungsschicht versehen ist. Vorteilhafterweise sind beide Oberflächen der Wärmedämmverbundplatte mit einer Armierungsschicht versehen. Die beidseitige Aufbringung einer Armierungsschicht auf den Wärmedämmplatten wirkt einem Schüsseln der Wärmedämmverbundplatte entgegen.

Die Armierungsschicht kann beispielsweise wenigstens eine außen liegende Kaschierung aus einem Papier, Vlies oder Gewebe umfassen. Die außen liegende Kaschierung ist vorzugsweise aufgeklebt. Alternativ oder ergänzend kann eine Armierungsmasse als Armierungsschicht aufgebracht sein. Da derartige Armierungsschichten in der Regel relativ dünn sind, wird das Zuschneiden der mehrschichtigen Wärmedämmverbundplatte - wenn überhaupt - nur unwesentlich erschwert.

Alternativ oder ergänzend können die beiden Wärmdämmplatten über eine Klebeverbindung im Bereich ihrer aneinander liegenden Seitenflächen miteinander verbunden sein. Auch auf diese Weise wird ein stabiler Verbund der beiden Wärmedämmplatten erzielt.

Um eine Wärmedämmverbundplatte mit sehr guten Wärmedämmeigenschaften zu erhalten, wird des Weiteren erfindungsgemäß vorgeschlagen, dass die erste Wärmedämmplatte ein Wärmedämmmaterial auf Basis von Polyurethan, Polyisocyanurat, Phenolharz oder Aerogelen umfasst. Dadurch kann die Dicke d der Wärmedämmplatte reduziert werden, was im Bereich einer Fenster- oder Türlaibung von Vorteil ist. Denn je dünner die Wärmedämmung im Bereich der Laibung ist, desto mehr bleibt von der Ansicht des Fensters bzw. der Tür erhalten.

Des Weiteren wird vorgeschlagen, dass die erste Wärmedämmplatte ein Vakuumisolierpaneel umfasst. Mittels Einsatzes eines Vakuumisolierpaneels lassen sich ebenfalls sehr gute Wärmedämmeigenschaften erzielen.
Vorzugweise besitzt das Wärmedämmmaterial der ersten Wärmedämmplatte eine Wärmeleitfähigkeit λ ≤ 0,028 W/(mK), vorzugsweise λ ≤ 0,025 W/(mK), weiterhin vorzugsweise λ ≤ 0,022 W/(mK). Damit weist das Wärmedämmmaterial hervorragende Wärmedämmeigenschaften auf, so dass die Dicke d der Wärmedämmplatte entsprechend reduziert werden kann. Derart geringe Wärmeleitfähigkeitswerte weisen insbesondere Aerogel-basierte Wärmedämmmaterialien sowie Vakuumisolierpaneele auf, so dass diese bevorzugt eingesetzt werden.
Weiterhin erfindungsgemäß umfasst die zweite Wärmedämmplatte ein Wärmedämmmaterial auf Basis von Polystyrol, insbesondere expandiertem (EPS) oder extrudiertem Polystyrol (XPS). Wärmedämmmaterialien aus Polystyrol weisen im Verhältnis zu den vorgeschlagenen Wärmedämmmaterialien der ersten Wärmedämmplatte zwar eine höhere Wärmeleitfähigkeit und damit schlechtere Wärmedämmeigenschaften auf, sie sind darüber hinaus jedoch deutlich kostengünstiger. Alternativ oder ergänzend kann die zweite Wärmedämmplatte ein Wärmedämmmaterial auf Basis von Mineralwolle, Glaswolle, Steinwolle, Mineralschaum oder Holzfasern umfassen. Beispielsweise kann die zweite Wärmedämmplatte ein Wärmedämmmaterial auf Basis von Mineralwolle, Glaswolle, Steinwolle, Mineralschaum oder Holzfasern umfassen. Beispielsweise kann die zweite Wärmedämmplatte eine Holzweichfaserplatte sein. Der Zuschnitt der Wärmedämmverbundplatte erfolgt daher bevorzugt im Bereich der kostengünstigeren zweiten Wärmedämmplatte. Vorteilhafterweise wird hierzu die Wärmedämmverbundplatte derart in der Laibung angebracht, dass die erste Wärmedämmplatte an dem Fenster bzw. an der Tür zu liegen kommt, während die zweite Wärmedämmplatte geringfügig eine auf der Gebäudeaußenwand aufgebrachte Wärmedämmschicht überragt. Der Überstand kann angezeichnet und vor dem Anbringen der Wärmedämmverbundplatte abgeschnitten werden, so dass die Schnittkante der zweiten Wärmedämmplatte flächenbündig mit der auf der Gebäudeaußenwand aufgebrachten Wärmedämmschicht abschließt. Insofern ist es unschädlich, dass die Wärmedämmverbundplatte im Bereich der zweiten Wärmedämmplatte eine höhere Wärmeleitfähigkeit aufweist, da diese in der Regel im Bereich der außen auf der Gebäudeaußenwand aufgebrachten Wärmedämmschicht zu liegen kommt.

Bevorzugt weisen beide Wärmedämmplatten die gleiche Dicke d auf. Dadurch wird das Aufbringen einer die Wärmedämmplatten verbindenden Armierungsschicht vereinfacht. Zudem ist sichergestellt, dass die aus den beiden Wärmedämmplatten zusammengesetzte Wärmedämmverbundplatte eine gleich bleibende Dicke aufweist. Dies vereinfacht die Anpassung der Wärmedämmverbundplatte an die vorhandene Laibungstiefe, da unerheblich ist, wo der Stoßbereich beider Wärmedämmplatten zu liegen kommt. Bevorzugt beträgt die Dicke d beider Wärmedämmplatten 5 mm bis 70 mm, vorzugsweise 10 mm bis 50 mm, weiterhin vorzugsweise 15 mm bis 40 mm. Die Dicke D der Wärmedämmverbundplatte entspricht dann der Summe aus der Dicke d und den Dicken etwaiger aufgebrachter Armierungsschichten.

Zur Lösung der eingangs genannten Aufgabe wird ferner ein Verfahren zur Wärmedämmung einer Fenster- oder Türlaibung in einer Gebäudeaußenwand unter Verwendung einer erfindungsgemäßen Wärmedämmverbundplatte vorgeschlagen. Das Verfahren sieht vor, dass das Anpassen der Wärmedämmverbundplatte an die vorhandene Laibungstiefe t durch Zuschneiden der Wärmedämmverbundplatte im Bereich der zweiten Wärmedämmplatte erfolgt. Denn gegenüber der ersten Wärmedämmplatte besitzt die zweite Wärmedämmplatte eine höhere Wärmeleitfähigkeit, d.h. schlechtere Wärmedämmeigenschaften, und/oder ist preiswerter herstellbar. Das erfindungsgemäße Verfahren hilft somit Materialkosten einzusparen.
Bei dem erfindungsgemäßen Verfahren wird die Wärmedämmverbundplatte bevorzugt derart in die Fenster- oder Türlaibung eingestellt, dass die erste Wärmedämmplatte an einem Fenster- oder Türelement und/oder die zweite Wärmedämmplatte im Wesentlichen im Bereich einer auf der Gebäudeaußenwand angebrachten Wärmedämmschicht zu liegen kommt. Soweit die Wärmedämmverbundplatte zu kürzen ist, damit die außen liegende Seitenfläche der zweiten Wärmedämmplatte bündig mit der Wärmedämmschicht abschließt, kann der Überstand angezeichnet und die Wärmedämmverbundplatte im Bereich der zweiten Wärmedämmplatte entsprechend gekürzt werden.
Bevorzugte Ausführungsformen der Erfindung werden nachfolgend anhand der beigefügten Zeichnungen näher erläutert. Diese zeigen:
Fig. 1 einen Querschnitt durch eine Wärmedämmverbundplatte,
Fig. 2 einen Querschnitt durch eine erste bevorzugte Ausführungsform einer erfindungsgemäßen Wärmedämmverbundplatte,
Fig. 3 einen Querschnitt durch eine zweite bevorzugte Ausführungsform einer erfindungsgemäßen Wärmedämmverbundplatte und
Fig. 4 einen Querschnitt durch eine Gebäudeaußenwand mit einer erfindungsgemäßen Wärmedämmverbundplatte zur Wärmedämmung einer Fensterlaibung.

### Ausführliche Beschreibung der Zeichnungen

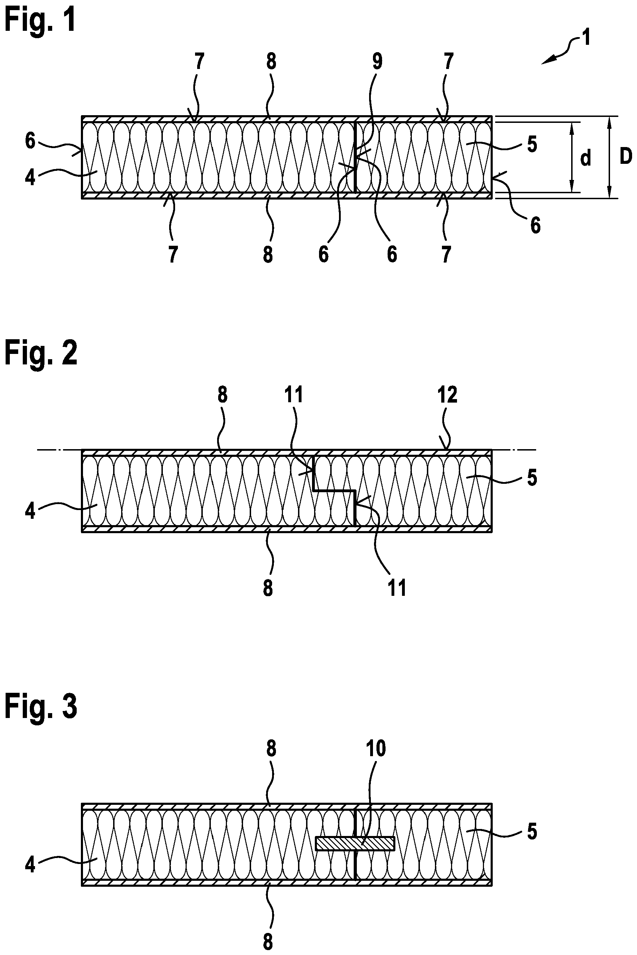

Der Fig. 1 ist eine Wärmedämmverbundplatte 1 zu entnehmen. Sie umfasst eine erste Wärmedämmplatte 4 aus einem ersten Wärmedämmmaterial sowie eine zweite Wärmedämmplatte 5 aus einem zweiten Wärmedämmmaterial, wobei die beiden Platten 4, 5 die gleiche Dicke d aufweisen und jeweils im Bereich einer Seitenfläche 6 über eine Klebeverbindung 9 miteinander verbunden sind. Die Oberflächen 7 der Wärmedämmplatten 4, 5 liegen somit jeweils nebeneinander, d.h. sie bilden gemeinsame ebene Oberflächen 7 aus.

Auf den nebeneinander liegenden Oberflächen 7 der Wärmedämmplatten 4, 5 ist ferner eine gemeinsame Armierungsschicht 8 vollflächig aufgebracht, so dass diese sich über den Stoßbereich hinweg erstreckt und demnach ebenfalls eine Verbindung der Wärmedämmplatten 4, 5 miteinander bewirkt. Durch das beidseitige Aufbringen einer Armierungsschicht 8 weist die Wärmedämmverbundplatte 1 eine Gesamtdicke D auf, welche sich aus der Dicke d der Wärmedämmplatten 4, 5 und den Schichtstärken der beiden Armierungsschichten zusammensetzt. Das Aufbringen wenigstens einer Armierungsschicht 8 auf die nebeneinander liegenden Oberflächen 7 der zwei Wärmedämmplatten 4, 5 kann eine zusätzliche Klebeverbindung 9 entbehrlich machen. Umgekehrt gilt das Gleiche. Welche Art der Verbindung zweckmäßig ist, hängt insbesondere von den zu verbindenden Wärmedämmplatten 4, 5 bzw. den diesen zugrunde liegenden Wärmedämmmaterialen ab.

Bei einer erfindungsgemäßen Wärmedämmverbundplatte - wie in der Fig. 2 dargestellt - weisen die aneinander liegenden Seitenflächen 6 der Wärmedämmplatten 4, 5 ein ineinander greifendes Profil 11 auf. Im Beispiel der Fig. 2 besteht das Profil 11 aus einem Stufenfalz. Dadurch wird ein in einer Richtung senkrecht zur Plattenebene 12 wirkender Formschluss bewirkt.

Um einen Formschluss in einer Richtung senkrecht zur Plattenebene 12 zu bewirken kann alternativ oder ergänzend - wie in der Fig. 3 dargestellt - auch ein mechanisches Verbindungsmittel 10 eingesetzt werden. In der Fig. 3 dient ein Stift als mechanisches Verbindungsmittel 10, welcher in beide aneinander liegende Seitenflächen 6 der Wärmedämmplatten 4, 5 eingelassen ist.

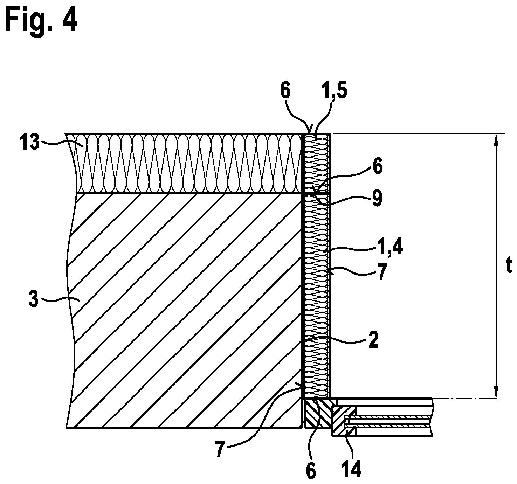

Fig. 4 zeigt eine eingebaute erfindungsgemäße Wärmedämmverbundplatte 1 zur Wärmedämmung einer Fensterlaibung 2 in einer Gebäudeaußenwand 3. Die Gebäudeaußenwand 3 weist eine außen aufgebrachte Wärmedämmschicht 13 auf, die bis an die Laibung 2 herangeführt ist. Bei dieser Wärmedämmschicht 13 kann es sich beispielsweise um eine ein- oder mehrlagige Wärmedämmung aus Polystyrol-Hartschaumplatten handeln. Derartige Platten sind relativ steif und finden demnach häufig in Wärmedämmverbundsystemen Einsatz. Die Laibung 2 der in der Fig. 4 dargestellten Gebäudeaußenwand 3 ist mittels einer erfindungsgemäßen Wärmedämmverbundplatte 1 gedämmt, die vorliegend eine deutlich geringere Gesamtdicke als die Wärmedämmschicht 13 aufweist. Das heißt jedoch nicht, dass die Laibung 2 schlechter wärmegedämmt ist. Denn die Wärmedämmverbundplatte 1 ist aus zwei Wärmedämmplatten 4, 5 zusammengesetzt, von denen die außen liegende Wärmedämmplatte 5 aus dem Wärmedämmmaterial der Wärmedämmschicht 13, vorzugsweise Polystyrol-Hartschaum, und die innen an einem Fensterelement 14 anliegende Wärmedämmplatte 4 aus einem Wärmedämmmaterial mit einer geringeren Wärmeleitfähigkeit λ hergestellt ist. Die inne liegende Wärmedämmplatte 4 weist demnach bessere Wärmedämmeigenschaften als die außen liegende Wärmedämmplatte 5 bzw. die Wärmedämmschicht 13 auf und kann somit eine geringere Dicke aufweisen. Beispielsweise kann die innen liegende Wärmedämmplatte 4 aus einem Aerogelbasierten Wärmedämmmaterial bestehen. Sofern die Ausbildung einer ebenen Wärmedämmschicht 13 das Zuschneiden bzw. Kürzen der Wärmedämmverbundplatte 1 erfordert, kann das Kürzen der Wärmedämmverbundplatte 1 im Bereich der außen liegenden, minderwertigeren Wärmedämmplatte 5 erfolgen. Dadurch werden Materialkosten eingespart.

### Bezugszeichenliste

- 1: Wärmedämmverbundplatte
- 2: Fenster- oder Türlaibung
- 3: Gebäudeaußenwand
- 4: erste Wärmedämmplatte
- 5: zweite Wärmedämmplatte
- 6: Seitenfläche
- 7: Oberfläche
- 8: Armierungsschicht
- 9: Klebeverbindung
- 10: mechanisches Verbindungsmittel
- 11: Profil
- 12: Plattenebene
- 13: Wärmedämmschicht
- 14: Fensterelement

## Patentansprüche

1. Wärmedämmverbundplatte (1) zur Wärmedämmung einer Fenster- oder Türlaibung (2) in einer Gebäudeaußenwand (3) umfassend eine erste Wärmedämmplatte (4) aus einem ersten Wärmedämmmaterial, das ein Wärmedämmmaterial auf Basis von Polyurethan, Polyisocyanurat, Phenolharz oder Aerogelen umfasst, und eine zweite Wärmedämmplatte (5) aus einem zweiten Wärmedämmmaterial, das ein Wärmedämmmaterial auf Basis von Polystyrol, Mineralwolle, Glaswolle, Steinwolle, Mineralschaum oder Holzfasern umfasst, wobei jede Wärmedämmplatte (4, 5) zwei über Seitenflächen (6) verbundene, parallele Oberflächen (7) besitzt wobei die beiden Wärmedämmplatten (4, 5) nebeneinander liegend angeordnet und miteinander verbunden sind, so dass die Wärmedämmplatten (4, 5) aneinander liegende Seitenflächen (6) aufweisen, **dadurch gekennzeichnet, dass** die beiden Wärmdämmplatten (4, 5) über ein mechanisches Verbindungsmittel (10) im Bereich ihrer aneinander liegenden Seitenflächen (6) miteinander verbunden sind und/oder die aneinander liegenden Seitenflächen (6) der beiden Wärmdämmplatten (4, 5) ein ineinander greifendes Profil (11) aufweisen und auf diese Weise einen in einer Richtung senkrecht zur Plattenebene (12) der Wärmedämmverbundplatte (1) wirksamen Formschluss bewirken.

2. Wärmedämmverbundplatte (1) nach Anspruch 1,
**dadurch gekennzeichnet, dass** die beiden Wärmedämmplatten (4, 5) über wenigstens eine gemeinsame Armierungsschicht (8), umfassend ein Papier, ein Vlies, ein Gewebe und/oder eine Armierungsmasse, miteinander verbunden sind, wobei sich die gemeinsame Armierungsschicht (8) vorzugsweise vollflächig über zwei nebeneinander liegende Oberflächen (7) der Wärmedämmplatten (4, 5) erstreckt.

3. Wärmedämmverbundplatte (1) nach Anspruch 1 oder 2,
**dadurch gekennzeichnet, dass** die beiden Wärmdämmplatten (4, 5) über eine Klebeverbindung (9) im Bereich ihrer aneinander liegenden Seitenflächen (6) miteinander verbunden sind.

4. Wärmedämmverbundplatte (1) nach einem der vorhergehenden Ansprüche,
**dadurch gekennzeichnet, dass** die erste Wärmedämmplatte (4) ein Vakuumisolierpaneel umfasst.

5. Wärmedämmverbundplatte (1) nach einem der vorhergehenden Ansprüche,
**dadurch gekennzeichnet, dass** das Wärmedämmmaterial der ersten Wärmedämmplatte (4) eine Wärmeleitfähigkeit (λ) ≤ 0,028 W/(mK), vorzugsweise (λ) ≤ 0,025 W/(mK), weiterhin vorzugsweise (λ) ≤ 0,022 W/(mK), besitzt.

6. Wärmedämmverbundplatte (1) nach einem der vorhergehenden Ansprüche,
**dadurch gekennzeichnet, dass** beide Wärmedämmplatten (4, 5) die gleiche Dicke (d) aufweisen, die vorzugsweise 5 mm bis 70 mm, weiterhin vorzugsweise 10 mm bis 50 mm, besonders bevorzugt 15 mm bis 40 mm beträgt.

7. Verfahren zur Wärmedämmung einer Fenster- oder Türlaibung (2) in einer Gebäudeaußenwand (3) unter Verwendung einer Wärmedämmverbundplatte (1) nach einem der vorhergenden Ansprüche, wobei das Anpassen der Wärmedämmverbundplatte (1) an die vorhandene Laibungstiefe (t) durch Zuschneiden der Wärmedämmverbundplatte (1) im Bereich der zweiten Wärmedämmplatte (5) erfolgt.

8. Verfahren nach Anspruch 7,
**dadurch gekennzeichnet, dass** die Wärmedämmverbundplatte (1) derart in die Fenster- oder Türlaibung (2) eingestellt wird, dass die erste Wärmedämmplatte (4) an einem Fenster- oder Türelement (14) und/oder die zweite Wärmedämmplatte (5) im Wesentlichen im Bereich einer auf der Gebäudeaußenwand (3) angebrachten Wärmedämmschicht (13) zu liegen kommt.

## Claims

1. A thermal insulation composite panel (1) for the thermal insulation of a window or door frame (2) in an exterior building wall (3), comprising a first thermal insulation panel (4) of a first thermal insulation material, which comprises a thermal insulation material based on polyurethane, polyisocyanurate, phenolic resin or aerogels, and a second thermal insulation panel (5) of a second thermal insulation material, which comprises a thermal insulation material based on polystyrene, mineral wool, glass wool, stone wool, mineral foam or wood fibres, wherein each thermal insulation panel (4, 5) possesses two parallel surfaces (7), connected by way of side surfaces (6), wherein the two thermal insulation panels (4, 5) are arranged adjacent to one another and are connected to one another, such that the thermal insulation panels (4, 5) have adjacent side surfaces (6),
**characterised in that**,
the two thermal insulation panels (4, 5) are connected to one another by way of a mechanical connecting means (10) in the region of their adjacent side surfaces (6), and/or the adjacent side surfaces (6) of the two thermal insulation panels (4, 5) have an interlocking profile (11), and in this way effect a form fit, which is effective in a direction at right angles to the plane (12) of the thermal insulation composite panel (1).

2. The thermal insulation composite panel (1) according to claim 1,
**characterised in that** the two thermal insulation panels (4, 5) are connected to one another by way of at least one common reinforcement layer (8), comprising a paper, a non-woven fabric, a woven fabric, and/or a reinforcement mass, wherein the common reinforcement layer (8) preferably extends over the whole of the two adjacent surfaces (7) of the thermal insulation panels (4, 5).

3. The thermal insulation composite panel (1) according to claim 1 or 2,
**characterised in that** the two thermal insulation panels (4, 5) are connected with one another by way of an adhesive bonding (9) in the region of their adjacent side surfaces (6).

4. The thermal insulation composite panel (1) according to any one of the preceding claims,
**characterised in that** the first thermal insulation panel (4) comprises a vacuum insulation panel.

5. The thermal insulation composite panel (1) according to any one of the preceding claims,
**characterised in that** the thermal insulation material of the first thermal insulation panel (4) possesses a thermal conductivity (λ) ≤ 0.028 W/(mK), preferably (λ) ≤ 0.025 W/(mK), further preferably (λ) ≤ 0.022 W/(mK).

6. The thermal insulation composite panel (1) according to any one of the preceding claims,
**characterised in that** the two thermal insulation panels (4, 5) have the same thickness (d), which preferably amounts to 5 mm to 70 mm, further preferably 10 mm to 50 mm, particularly preferably 15 mm to 40 mm.

7. A method for the thermal insulation of a window or door frame (2) in a building outer wall (3), with the use of a thermal insulation composite panel (1) according to any one of the preceding claims, wherein the adaptation of the thermal insulation composite panel (1) to the frame depth (t) that is present is undertaken by tailoring the thermal insulation composite panel (1) in the region of the second thermal insulation panel (5).

8. The method according to claim 7,
**characterised in that** the thermal insulation composite panel (1) is inserted into the window or door frame (2) such that the first thermal insulation panel (4) is located against a window or door element (14), and/or the second thermal insulation panel (5) is located essentially in the region of a thermal insulation layer (13) applied onto the building outer wall (3).

## Revendications

1. Panneau composite d'isolation thermique (1) destiné à assurer l'isolation thermique d'un intrados (2) de porte ou de fenêtre dans un mur extérieur de bâtiment (3) comprenant un premier panneau d'isolation thermique (4) en une première matière d'isolation thermique qui comprend une matière d'isolation thermique sur base de polyuréthane, de polyisocyanurate, de résine phénolique ou d'aérogels et un deuxième panneau d'isolation thermique (5) en une deuxième matière d'isolation thermique qui comprend une matière d'isolation thermique sur base de polystyrène, de laine minérale, de laine de verre, de laine de roche, de mousse minérale ou de fibres de bois, chaque panneau d'isolation thermique (4, 5) ayant deux surfaces (7) parallèles reliées par l'intermédiaire de surfaces latérales (6), les deux panneaux d'isolation thermique (4, 5) étant placés côte à côte et reliés l'un à l'autre, de sorte que les panneaux d'isolation thermique (4, 5) comportent des surfaces latérales (6) adjacentes,
**caractérisé en ce que**
les deux panneaux d'isolation thermique (4, 5) sont reliés l'un à l'autre dans la zone de leurs surfaces latérales adjacentes (6) par l'intermédiaire d'un moyen de liaison mécanique (10) et/ou les surfaces latérales adjacentes (6) des deux panneaux d'isolation thermique (4, 5) comportent un profil (11) qui s'imbrique et provoquent de cette manière une complémentarité de forme agissant dans une direction octogonale au plan de panneau (12) du panneau composite d'isolation thermique (1).

2. Panneau composite d'isolation thermique (1) selon la revendication 1,
**caractérisé en ce que** les deux panneaux d'isolation thermique (4, 5) sont reliés l'un à l'autre par l'intermédiaire d'au moins une couche d'armature (8) commune, comprenant un papier, un non-tissé, un tissu et/ou une masse d'armature, la couche d'armature (8) commune s'étendant de préférence à pleine surface sur deux surfaces (7) placées côte à côte des panneaux d'isolation thermique (4, 5).

3. Panneau composite d'isolation thermique (1) selon la revendication 1 ou 2,
**caractérisé en ce que** les deux panneaux d'isolation thermique (4, 5) sont reliés l'un à l'autre par l'intermédiaire d'un assemblage par collage (9) dans la zone de leurs surfaces latérales (6) adjacentes.

4. Panneau composite d'isolation thermique (1) selon l'une quelconque des revendications précédentes,
**caractérisé en ce que** le premier panneau d'isolation thermique(4) est un lambris d'isolation sous vide.

5. Panneau composite d'isolation thermique (1) selon l'une quelconque des revendications précédentes,
**caractérisé en ce que** la matière d'isolation thermique du premier panneau d'isolation thermique (4) présente une conductivité thermique (λ) ≤ 0,028 W/ (mK), de préférence (λ) ≤ 0,025 W/ (mK), de manière plus préférentielle (λ) ≤ 0,022 W/ (mK).

6. Panneau composite d'isolation thermique (1) selon l'une quelconque des revendications précédentes,
**caractérisé en ce que** les deux panneaux d'isolation thermique (4, 5) présentent la même épaisseur (d) qui est de préférence de 5 mm à 70 mm, de manière plus préférentielle, de 10 mm à 50 mm, de manière particulièrement préférentielle, de 15 mm à 40 mm.

7. Procédé destiné à assurer l'isolation thermique d'un intrados (2) de porte ou de fenêtre dans un mur extérieur de bâtiment (3) en utilisant un panneau composite d'isolation thermique (1) selon l'une quelconque des revendications précédentes, l'adaptation du panneau composite d'isolation thermique (1) à la profondeur d'intrados existante (t) s'effectuant par découpe du panneau composite d'isolation thermique (1) dans la zone du deuxième panneau d'isolation thermique(5).

8. Procédé selon la revendication 7,
**caractérisé en ce qu'**on insère le panneau composite d'isolation thermique (1) dans l'intrados (2) de porte ou de fenêtre de telle sorte que le premier panneau d'isolation thermique (4) vienne s'appuyer contre un élément de porte ou de fenêtre (14) et/ou que le deuxième panneau d'isolation thermique (5) vienne s'appuyer sensiblement dans la zone d'une couche d'isolation thermique (13) montée sur le mur de bâtiment (3).
